# EUROPÄISCHE PATENTSCHRIFT

(11) **EP 0 406 629 B1**
(45) Veröffentlichungstag und Bekanntmachung des Hinweises auf die Patenterteilung: **22.02.1995**
(21) Anmeldenummer: 90111802.6
(22) Anmeldetag: 22.06.1990
(51) Int. Cl.: C09B 29/30, C09B 43/44

(54) **Verfahren zur Herstellung von Azofarbstoffen**
Method of producing azo dyes
Procédé de fabrication de colorants azoiques

(30) Priorität: 05.07.1989 DE 3922065
(43) Veröffentlichungstag der Anmeldung: 09.01.1991
(73) Patentinhaber: BAYER AG, 51368 Leverkusen (DE)
(72) Erfinder: Jäger, Horst, Dr., D-5090 Leverkusen (DE); Arlt, Dieter, Prof.Dr., D-5000 Köln 80 (DE)

(56) Entgegenhaltungen:
- DE-A- 3 217 224

## Beschreibung

Die Erfindung betrifft ein Verfahren zur Herstellung von Aminoazofarbstoffen. Aus DE-A-3 217 224 ist bereits bekannt, eine Aminonaphtholsulfonsäure mit einem Anhydrid einer zweibasischen Säure umzusetzen, die erhaltene Acylaminonaphtholsulfonsäure mit einer Diazoniumverbindung zu kuppeln und das erhaltene Kupplungsprodukt zu hydrolysieren.

Die vorliegende Erfindung betrifft ein verbessertes Verfahren zur Herstellung von Aminoazofarbstoffen der Formel 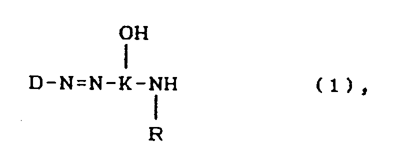
worin
- D: den Rest einer Diazokomponente und
- K: einen Sulfonaphthylenrest bedeutet und
- R: für Wasserstoff oder Methyl steht,
dadurch gekennzeichnet, daß man die Diazoverbindung eines Amins der Formel

D-NH₂ (2)

mit einer Kupplungskomponente der Formel 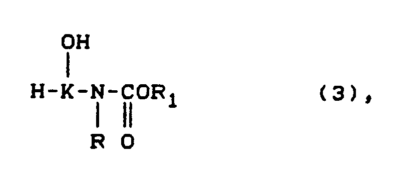
worin
- R₁: für gegebenenfalls substituiertes C₁-C₄-Alkyl oder Phenyl steht,
zu einem Farbstoff der Formel 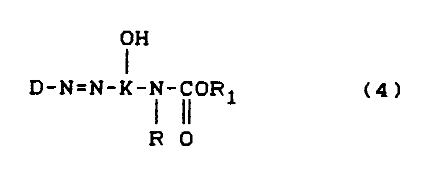
vereinigt und daraus durch Verseifen im alkalischen Medium Farbstoffe (1) herstellt.

D ist vorzugsweise ein gegebenenfalls substituierter Rest der Benzol-, Naphthalin-, Diphenyl- oder heterocyclischen Reihe.

Beispiele für geeignete Substituenten sind: SO₃H, C₁-C₄-Alkyl, C₁-C₄-Alkoxy, wobei diese Alkyl- oder Alkoxyreste beispielsweise durch NH₂, OCH₃, OSO₃H substituiert sein können, Halogenatome wie F, Cl oder Br, COOH, NO₂, NH₂, OH, Phenylamino, wobei der Phenylrest beispielsweise durch CH₃, OCH₃, Cl, SO₃H substituiert sein kann, Phenyl- und Naphthylazo, wobei diese Reste insbesondere durch SO₃H subtituiert sind. Ein bevorzugter Substituent des Restes D ist die Sulfogruppe.

Beispiele für Amine (2) sind folgende:
1-Amino-benzol-2-sulfonsäure,
1-Amino-benzol-3-sulfonsäure,
1-Amino-benzol-4-sulfonsäure,
1-Amino-benzol-2,5-disulfonsäure,
1-Amino-benzol-2,4-disulfonsäure,
1-Amino-4-chlor-benzol-2-sulfonsäure,
1-Amino-4-methoxy-benzol-2-sulfonsäure,
1-Amino-4-methyl-benzol-2-sulfonsäure,
1-Amino-methyl-benzol-2,5-disulfonsäure,
1-Amino-4-methoxy-benzol-2,5-disulfonsure,
1-Amino-2-carboxy-benzol-4-sulfonsäure,
1-Amino-2-carboxy-benzol,
1-Amino-4-nitro-benzol-2-sulfonsäure,
1-Amino-4-(4′-sulfophenylamino)-benzol-2-sulfonsäure,
1-Amino-4-phenylamino-benzol-2-sulfonsäure,
1-Amino-2-sulfo-benzol-<4 azo 1>-4-sulfo-benzol,
1-Amino-2-sulfo-benzol-<4 azo 1>-3-sulfo-benzol,
1-Amino-2-sulfo-benzol-<4 azo 1>-2-sulfo-benzol,
1-Amino-2-sulfo-benzol-<4 azo 1>-2,5-disulfo-benzol,
1-Amino-2-carboxy-benzol-<4 azo 1>-4-sulfo-benzol,
1-Amino-2-sulfo-benzol-<4 azo 2>-3,6-disulfonaphthalin,
1-Amino-2-sulfo-benzol-<4 azo 2>-4,8-disulfonaphthalin,
1-Amino-2-sulfo-benzol-<4 azo 2>-3,6,8-disulfonaphthalin,
1-Amino-benzol-<4 azo 1>-4-sulfo-benzol,
1-Amino-benzol-<4 azo 2>-4,8-disulfo-naphthalin,
1-Amino-2-sulfo-benzol-<4 azo 2>-6,8-disulfonaphthalin,
1-Amino-2-carboxy-benzol-<4 azo 1>-4-sulfo-benzol,
2-Amino-naphthalin-3,6-disulfonsäure,
2-Amino-naphthalin-6,8-disulfonsäure,
2-Amino-naphthalin-4,8-disulfonsäure,
2-Amino-naphthalin-5,7-disulfonsäure,
2-Amino-naphthalin-3,6,8-disulfonsäure,
2-Amino-naphthalin-4,6,8-disulfonsäure,
1-Amino-naphthalin-4,6-disulfonsäure,
1-Amino-naphthalin-4,7-disulfonsäure,
2-Amino-naphthalin-2,4-disulfonsäure,
2-Amino-naphthalin-1-sulfonsäure,
2-Amino-naphthalin-1,5-disulfonsäure,
2-Amino-naphthalin-1,5,7-trisulfonsäure,
4-Amino-diphenyl-3-sulfonsäure,
4-Amino-diphenyl-3,4′-disulfonsäure,
2-(4˝-Amino-3˝-sulfo-phenyl)-1′, 2′, 4,5-naphthotriazol-5′,7′-disulfonsäure,
2-(4˝-Amino-3˝-carboxy-phenyl)-1′, 2′, 4,5-naphthotriazol-5′,7′-disulfonsäure,
2-Amino-benzthiazol-6-sulfonsäure,
2-Amino-benzthiazol-7-sulfonsäure,
2-(4′-Amino-3′-sulfo-phenyl)-6-methyl-benzothiazol-7-sulfonsäure.

Als Beispiele für Sulfonaphthylreste K seien folgende aufgeführt: 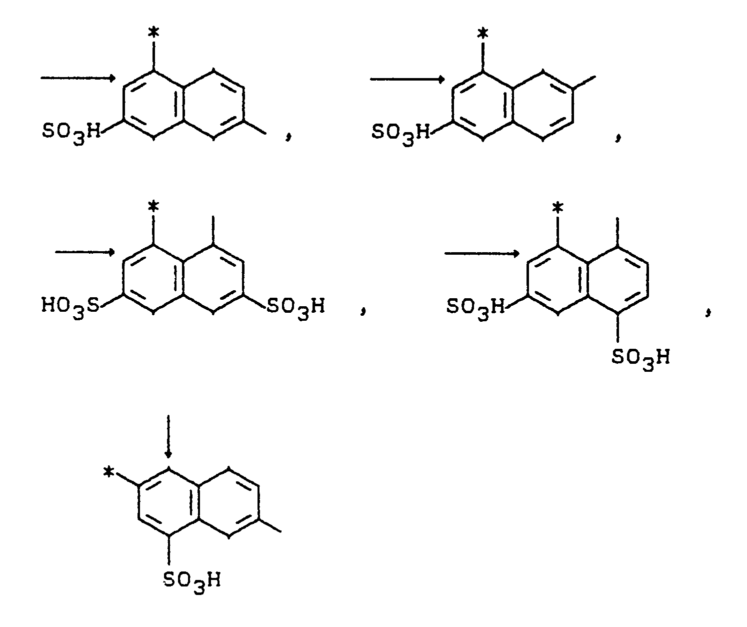
(Die OH-Gruppe steht an der mit einem Stern (*) gekennzeichneten Bindung. Der Pfeil bezeichnet die Kupplungsstelle, die NHR-Gruppe, beziehungsweise NRCOOR₁-Gruppe ist über die freie Bindung gebunden.)

Für R₁ kommen folgende Reste infrage:
CH₃, C₂H₅, n-C₃H₇, iso-C₃H₇, n-C₄H₉, iso-C₄H₉, tert.-C₄H₉-,

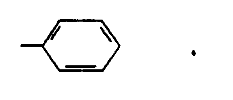

Im Rahmen der Formel (1) sind Farbstoffe bevorzugt, in denen D für einen sulfogruppenhaltigen Rest der Benzol-, Naphthalin- oder Benzol-azo-Benzol-Reihe, K für 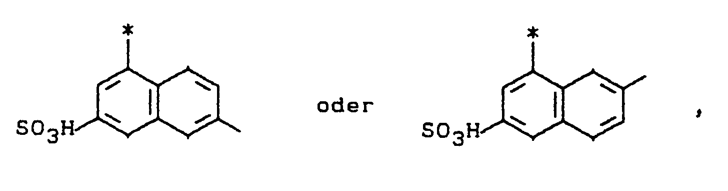
- R: für Wasserstoff und R₁ für Methyl oder Ethyl steht.

Die Kupplungskomponenten (3) erhält man durch Acylierung von Aminohydroxynaphthalinsulfosäuren der Formel 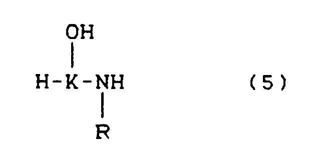
mit Chlorameisensäureestern der Formel 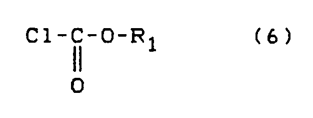
Diese Stufe wird vorzugsweise im Wasser bei Temperaturen von 0° - 20°C und im pH-Bereich von 3-7 vorzugsweise 5-6 ausgeführt, wobei die bei der Acylierung freiwerdende Salzsäure durch Zusatz von Alkali- oder Erdalkalihydroxyden-, -carbonaten, -hydrogencarbonaten oder -phosphaten neutralisiert wird.

Die Amine (2) werden nach den aus der Literatur bekannten Verfahren diazotiert.

Die Kupplung der diazotierten Amine (2) mit den Kupplungskomponenten (3) wird vorzugsweise in Wasser bei Temperaturen zwischen 0° und 50°C und im pH-Bereich von 4-7, durchgeführt, wobei die bei der Kupplung freiwerdende Säure durch Zusatz von Alkali- oder Erdalkalihydroxyden, -carbonaten, -hydrogencarbonaten oder -phosphaten abgefangen wird.

Die Verseifung der Acylaminoazofarbstoffe (4) zu den Aminoazofarbstoffen (1) erfolgt durch Erhitzen der wäßrigen Lösungen in Gegenwart von Alkalien bei 70° - 100°C, insbesondere 80° - 90°C. Der Gehalt an Alkali liegt bei 1 bis 2 mol pro Liter Farbstofflösung. Vorzugsweise verwendet man als Alkali Lithium-, Natrium- oder Kalium-hydroxid.

Die Farbstoffe der Formel (1) sind beispielsweise wertvolle Zwischenprodukte zur Herstellung von Reaktivfarbstoffen, insbesondere solchen der Monofluortriazin- oder Fluorpyrimidinreihe.

Bei den Temperaturangaben in den Beispielen handelt es sich um °C. Die Formeln der wasserlöslichen Farbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium- oder Kaliumsalze.

### Beispiel

### A. Acylierung

1,0 mol 2-Amino-5-hydroxy-naphthalin-7-sulfonsäure(I-Säure) werden in 3 l Eiswasser angerührt. Bei 0° - 5°C läßt man in einer Stunde 1,1 mol Chlorameisensäureethylester zutropfen, wobei man die freiwerdende Salzsäure durch Eintropfen von 20%iger Sodalösung so neutralisiert, daß der pH-Wert im Bereich von 5-6 liegt. Die I-Säure geht während der Acylierung in Lösung. Der Gehalt an diazotierbarem Amin liegt unter 2%, der Kupplungswert zwischen 95 und 98%.

### B. Diazotierung

1,0 mol 1-Amino-2-sulfo-benzol-4-azo-1-4-sulfo-benzol werden in 2,5 l Wasser verrührt und mit 140 ml 30%iger Salzsäure versetzt. Man kühlt auf 5° - 10°C ab und läßt dann in einer Stunde 231 ml 30%ige Natriumnitritlösung unter die Oberfläche einlaufen. Die Diazotierung ist nach halbstündigem Rühren beendet. Der geringe Überschuß an Nitrit wird durch Zusatz von wenig Amidosulfonsäure zerstört.

### C. Kupplung

Die nach B erhaltene hellbraune dickflüssige Suspension wird dann in einer Stunde zu der nach A erhaltenen Lösung der Kupplungskomponente bei 30° - 35°C gegeben, wobei man gleichzeitig 20%ige Sodalösung zutropft um den pH-Wert zwischen 5 und 5,5 zu halten. Nach halbstündigem Nachrühren ist die Kupplung beendet. Der Farbstoff ist zum Teil ausgefallen.

### D. Verseifung

Zu der nach C erhaltenen Suspension wird soviel konzentrierte Natronlauge zugesetzt, daß eine ca. 2n-Natronlauge vorliegt. Man erwärmt eine Stunde auf 85°C, wobei die Ethoxycarbonylgruppe abgespalten wird. Der Farbstoff liegt in Lösung vor. Zur Isolierung stellt man den pH-Wert auf 9,5 und salzt durch Einstreuen von acht Volumenprozent Kaliumchlorid aus. Der Farbstoff wird durch Absaugen isoliert. In Form der freien Säure entspricht er der Formel: 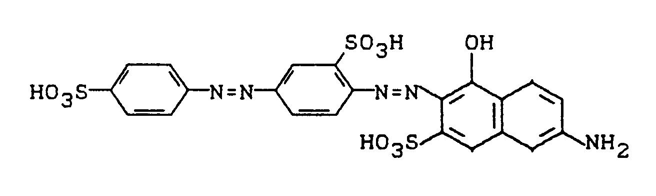
Der Farbstoff ist in Form dieser wäßrigen Paste für die Weiterverarbeitung - beispielsweise für die Herstellung eines Reaktivfarbstoffs - geeignet.

Nach den Angaben dieses Beispiels erhält man weitere Farbstoffe in hoher Ausbeute und Reinheit, wenn anstelle der bei B verwendeten Diazokomponente die nachfolgend genannten verwendet werden:
1-Amino-benzol-2-sulfonsäure
1-Amino-benzol-2,5-disulfonsäure
1-Amino-4-methoxy-benzol-2-sulfonsäure
1-Amino-4-methoxy-benzol-2,5-disulfonsäure
1-Amino-4-methyl-benzol-2-sulfonsäure
1-Amino-4-methyl-benzol-2,5-disulfonsäure
1-Amino-benzol-2,4-disulfonsäure
2-Amino-naphthalin-1-sulfonsäure
2-Amino-naphthalin-1,5-disulfonsäure
2-Amino-naphthalin-1,5,7-trisulfonsäure
2-Amino-naphthalin-3,6-disulfonsäure
2-Amino-naphthalin-3,6,8-trisulfonsäure
1-Amino-benzol<4 azo 1>4-sulfo-benzol
1-Amino-2-sulfo-benzol<4 azo 2>4,8-disulfonaphthalin
1-Amino-2-carboxy-benzol<4 azo 1>4-sulfo-benzol
1-Amino-2-sulfo-benzol<4 azo 1>2,5-disulfo-benzol.

Weitere Farbstoffe erhält man in hoher Ausbeute und Reinheit wenn man anstelle der bei A verwendeten I-Säure 2-Amino-8-hydroxy-naphthalin-6-sulfonsäure (γ-Säure) einsetzt und die bei B genannten Diazokompontenten verwendet.

## Patentansprüche

1. Verfahren zur Herstellung von Aminoazofarbstoffen der Formel 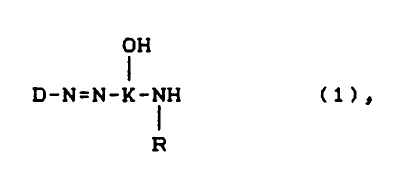 worin
D den Rest einer Diazokomponente und
K einen Sulfonaphthylenrest bedeutet und
R für Wasserstoff oder Methyl steht,
dadurch gekennzeichnet, daß man die Diazoverbindung eines Amins der Formel
D-NH₂ (2)
mit einer Kupplungskomponente der Formel 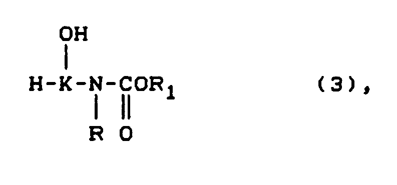 worin
R₁ für gegebenenfalls substituiertes C₁-C₄-Alkyl oder Phenyl steht,
zu einem Farbstoff der Formel 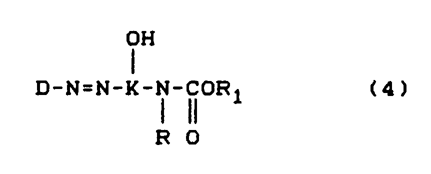 vereinigt und daraus durch Verseifen im alkalischen Medium Farbstoffe (1) herstellt,

2. Verfahren nach Anspruch 1 dadurch gekennzeichnet, daß man Amine D-NH₂ mit D = sulfogruppenhaltiger Rest der Benzol-, Naphthalin- oder Benzol-azo-benzol-Reihe und Kupplungskomponenten der Formel 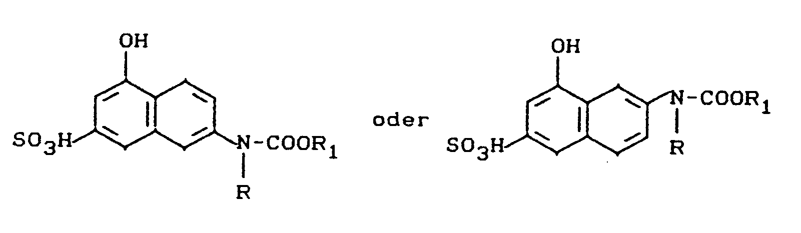 verwendet.

## Claims

1. Process for the preparation of aminoazo dyestuffs of the formula 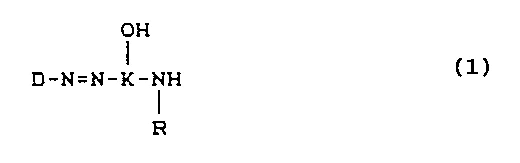 wherein
D denotes the radical of a diazo component,
K denotes a sulphonaphthylene radical and
R represents hydrogen or methyl,
characterized in that the diazo compound of an amine of the formula
D-NH₂ (2)
is combined with a coupling component of the formula 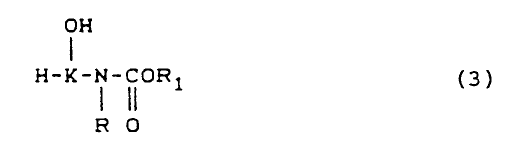 wherein
R₁ represents optionally substituted C₁-C₄-alkyl or phenyl,
to give a dyestuff of the formula 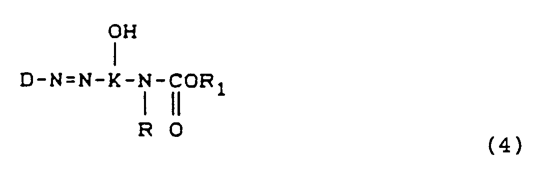 and dyestuffs (1) are prepared therefrom by hydrolysis in an alkaline medium.

2. Process according to Claim 1, characterized in that amines D-NH₂, where D = a radical, containing sulpho groups, of the benzene, naphthalene or benzene-azo-benzene series, and coupling components of the formula 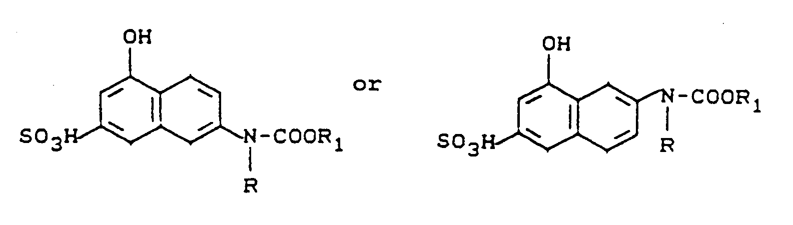 are used.

## Revendications

1. Procédé de fabrication de colorants aminoazoïques de formule 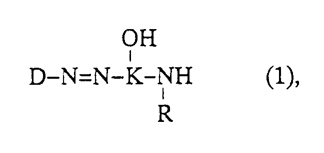 dans laquelle
D est le reste d'un composant diazo et
K est un reste sulfonaphtylène et
R est l'hydrogène ou le méthyle,
caractérisé en ce qu'on copule le composé diazo d'une amine de formule
D-NH₂ (2)
avec un composant de copulation de formule 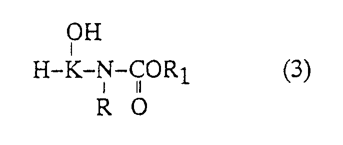 dans laquelle
R₁ représente un alkyle C₁-C₄ ou phényle substitué le cas échéant, pour donner un colorant de formule 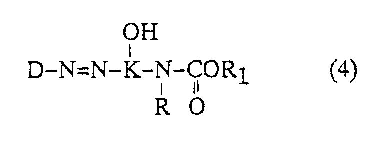 et par saponification dans un milieu alcalin on prépare le colorant (1).

2. Procédé selon la revendication 1, caractérisé en ce qu'on utilise des amines D-NH₂ avec D = reste contenant un groupe sulfo de la série benzène, naphtalène ou benzène-azo-benzène et des composants de copulation de formule
